# EUROPÄISCHE PATENTSCHRIFT

(11) **EP 2 005 280 B1**
(45) Veröffentlichungstag und Bekanntmachung des Hinweises auf die Patenterteilung: **06.06.2012**
(21) Anmeldenummer: 07723135.5
(22) Anmeldetag: 09.03.2007
(51) Int. Cl.: G06F 3/033, G06F 3/048

(54) **VORRICHTUNG ZUR STEUERUNG DER BEWEGUNG EINES CURSORS**
DEVICE FOR CONTROLLING THE MOVEMENT OF A CURSOR
DISPOSITIF DE COMMANDE DU DÉPLACEMENT D'UN CURSEUR

(30) Priorität: 11.04.2006 DE 102006016898
(43) Veröffentlichungstag der Anmeldung: 24.12.2008
(73) Patentinhaber: Bayerische Motoren Werke Aktiengesellschaft, 80809 München (DE)
(72) Erfinder: KUENZNER, Hermann, 85356 Freising (DE)
(74) Vertreter: Bullwein, Fritz
(86) Internationale Anmeldenummer: PCT/EP2007/002053
(87) Internationale Veröffentlichungsnummer: WO 2007/118559

(56) Entgegenhaltungen:
- EP-A- 0 796 766
- EP-A- 1 262 740
- EP-B- 0 366 132
- WO-A-2004/027803
- DE-A1- 19 836 262
- US-A- 6 057 826
- US-A- 6 154 201

## Beschreibung

Die Erfindung bezieht sich auf eine Vorrichtung mit den Merkmalen des Oberbegriffs von Patentanspruch 1.

Eine derartige Vorrichtung ist aus der EP 0 796 766 A2 bekannt. Dabei dient das Bedienteil dazu, die Anzahl der Ebenen innerhalb der Menüstruktur zu vergrößern. Hierzu ist angegeben, die Ebenen über den Umfang der Bildschirmanzeige verteilt anzuordnen. Eine derartige Vorrichtung bedeutet für den Benutzer eine gewisse Schwierigkeit, da er keine eindeutige Zuordnung zwischen der Zusatzbewegung des Bedienteils und der Axial- bzw. Rotationsbewegung dieses Teils vorfindet. Auch gestaltet sich der Übergang zwischen den Ebenen und innerhalb der Menüstruktur für ihn nicht eindeutig und führt letztendlich zu einer erheblichen Ablenkung des Benutzers vom Verkehrsgeschehen.

Aus der US 6 154 201 A ist eine Vorrichtung zur Steuerung der Bewegung eines Cursors gemäß dem Oberbegriff des Anspruchs 1 bekannt.

Aus der US 6 057 826 A ist eine Cursorsteuerung zum Anvisieren eines auf einem Bildschirm dargestellten Objekts mittels eines Dreh-Druck-Stellers bekannt. Dieser bekannte Stand der Technik beschäftigt sich mit der Aufgabe ein Mensch-Maschine-Interface mit reduzierten Dimensionen zu schaffen, das zudem unabhängig von der Orientierung der Hand bedient werden kann und das eine hoch präzise Selektion ermöglicht. Zur Lösung dieser Aufgabe wird vorgeschlagen, bei der Rotation des Dreh-Druck-Stellers eine der Rotation entsprechende Cursorbewegung auf dem Bildschirm als sichtbare Linie darzustellen. Der Cursor bewegt sich solange entlang dieser voreingestellten Linie wie durch den Benutzer eine Bestätigungseingabe durch Drücken quer zur Drehrichtung des Bedienteils erfolgt.

Der Erfindung liegt die Aufgabe zugrunde, eine Vorrichtung der eingangs genannten Art zu schaffen, bei der eine eindeutige Zuordnung zwischen der Bildschirmanzeige und den verschiedenen Bewegungsmöglichkeiten des Bedienteils besteht.

Die Erfindung löst diese Aufgabe durch die Merkmale des Patentanspruchs 1.

Mittels des Bedienteils lässt sich die Bewegung des Cursors in der Blidschirmanzeige auf verschiedene Weise steuern. Durch Querbewegen des Bedienteils lassen sich Bewegungen mit zwei Freiheitsgraden durchführen. Durch zusätzliches Verdrehen des Bedienteils während dieser Querbewegung lässt sich der Cursor in einer demgegenüber schrägen Richtung bewegen. Ein beliebiger Punkt innerhalb der Anzeige lässt sich damit schnell und sicher ansteuern. Eine ggf. bestehende Axialbewegung des Bedienteils ist für die gesamte Positionssteuerung des Cursors nicht erforderlich und kann, wie auch weiter unten im Detail beschrieben wird, für weitere Funktionalitäten eingesetzt werden.

Ausführungsformen der Erfindungen sind vielfältig möglich. Zum einen kann die Querbewegung des Bedienteils unterschiedlich gestaltet sein. Sie kann als

Transversal- oder als-Kippbewegung gestaltet sein. Ergänzend kann auch eine Zwangsführung dafür vorgesehen sein. Die Bewegung des Cursors in den beiden Grundrichtungen ist damit irrtumsfrei möglich. Sie kann vorteilhafterweise solange erfolgen, wie das Bedienteil aus der Ausgangslage ausgelenkt ist.

Die durch Verdrehen des Bedienteils ausgelöste Schrägbewegung kann ebenfalls unterschiedlich sein. So kann der Schrägwinkel fest und beispielsweise gleich 45 sein. Alternativ kann der Schrägwinkel dem Drehwinkel des Bedienteils entsprechen. Dadurch ergibt sich eine große Variation in der Bewegungssteuerung und der Vorteil, beliebige Punkte sicher anfahren zu können. Während der Bewegung kann durch entsprechendes Verdrehen des Bedienteils die Bewegungsrichtung stets nachkorrigiert werden.

Weitere vorteilhafte Ausgestaltungen der Erfindung sind in den Patentansprüchen angegeben und werden nachfolgend an Hand der Beschreibung eines Ausführungsbeispiels erläutert.

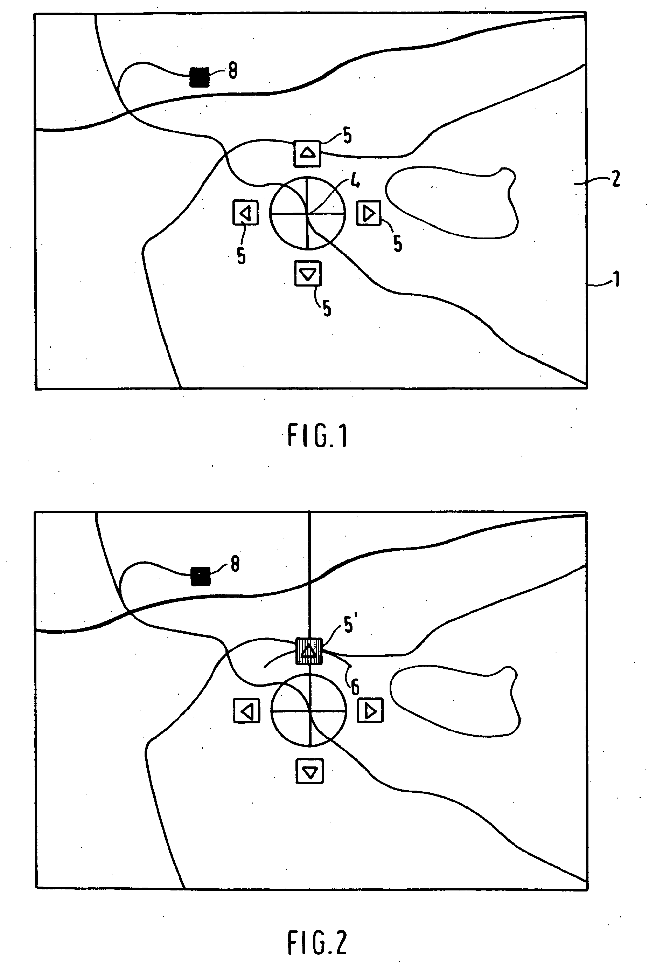

Anhand der Zeichnung ist die Erfindung weiter erläutert. Sie zeigt in den Fig. 1 bis 6 die mittels der erfindungsgemäßen Vorrichtung gesteuerte Bewegung eines Cursors in einer Bildschirmanzeige.

In Fig. 1 ist die im Rahmen der Erfindung vorgesehene Bildschirmanzeige prinzipiell dargestellt. Innerhalb einer Anzeigefläche 1, die gleich der Bildfläche eines Bildschirms ist, befindet sich ein Bild eines Landkartenausschnitts 2 und im Mittelbereich 3 ein als Fadenkreuz dargestellter Cursor 4. Zur Verdeutlichung der Grund-Bewegungsmöglichkeiten des Cursors 4 sind Pfeile 5 eingeblendet. Die Pfeile symbolisieren Bewegungen in den vier Himmelsrichtungen. Der Cursor 4 kann durch Neigen eines Bedienteils (nicht dargestellt) bewegt werden. Beim Bedienteil handelt es sich um einen Dreh-Druck-Knopf, wie er aus der EP 0 366 132 B1 bekannt ist und der zusätzlich ausgehend von seiner senkrechten Ausgangslage in zwei zueinander senkrechten Ebenen geneigt werden kann. Der Cursor wird entsprechend der Neigungsrichtung solange relativ zum Landkartenausschnitt 2 bewegt, wie das Bedienteil geneigt ist.

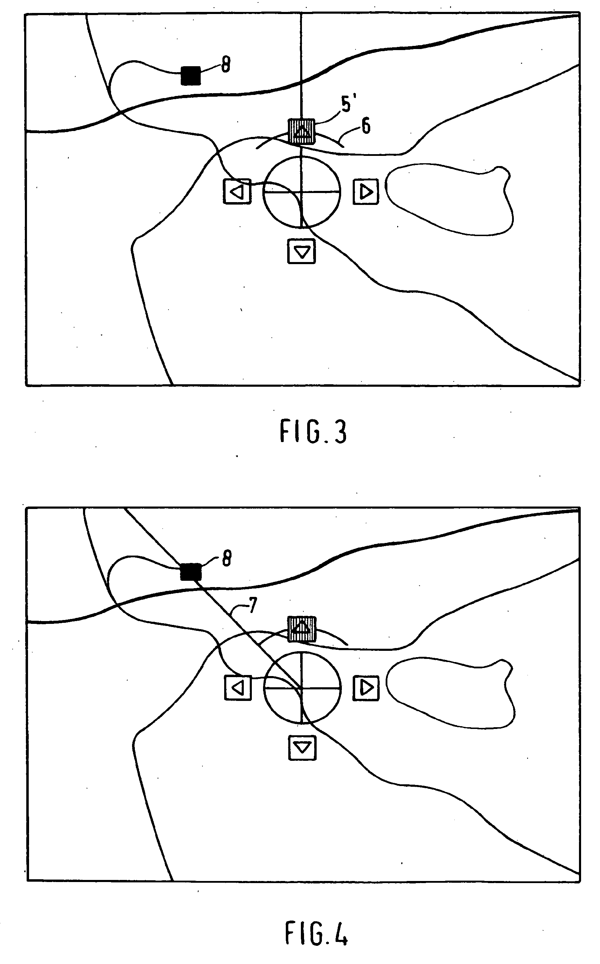

Es sei wie an Hand von Fig. 2 und 3 dargestellt, eine Neigung des Bedienteils angenommen, durch die eine Bewegung des Cursors 4 nach Norden erreicht wird. Diese Neigung erfolgt der Anschaulichkeit halber durch eine Bewegung des Bedienteils in der Draufsicht nach vorne. Fig. 2 zeigt den Ausgangspunkt, Fig. 3 die Lage des Cursors nach Ausführen einer gewissen Bewegung. Als optische Hilfe wird zusätzlich die tatsächliche Bewegungsrichtung (hier: Nord) durch eine hervorgehobene optische Darstellung des maßgeblichen Pfeils 5' dargestellt. Als zusätzliche optische Hilfe wird ferner ein Kreisbogen 6 eingeblendet, der die erfindungsgemäße Möglichkeit symbolisiert, den Cursor 4 auch schräg relativ zum Landkartenausschnitt 2 zu bewegen.

Diese Schrägbewegung des Cursors 4 kann erreicht werden, indem das Bedienteil im geneigten Zustand zusätzlich relativ zu seiner Längsachse verdreht wird. Bei einer Drehbewegung des Bedienteils in Draufsicht nach links führt der Cursor 4 eine Schrägbewegung nach links oben (Nord-West) solange durch, wie das Bedienteil nach vorne geneigt und nach links gedreht ist. Die tatsächliche Bewegungsrichtung des Cursors 4 wird in Fig. 4 dargestellt und ist durch eine weitere optische Hilfe in Form eines Richtungsvektors 7 wiedergegeben. Damit lassen sich gewünschte Objekte des Landkartenausschnitts 2, hier als ausgefülltes Quadrat 8 dargestellt, anvisieren.

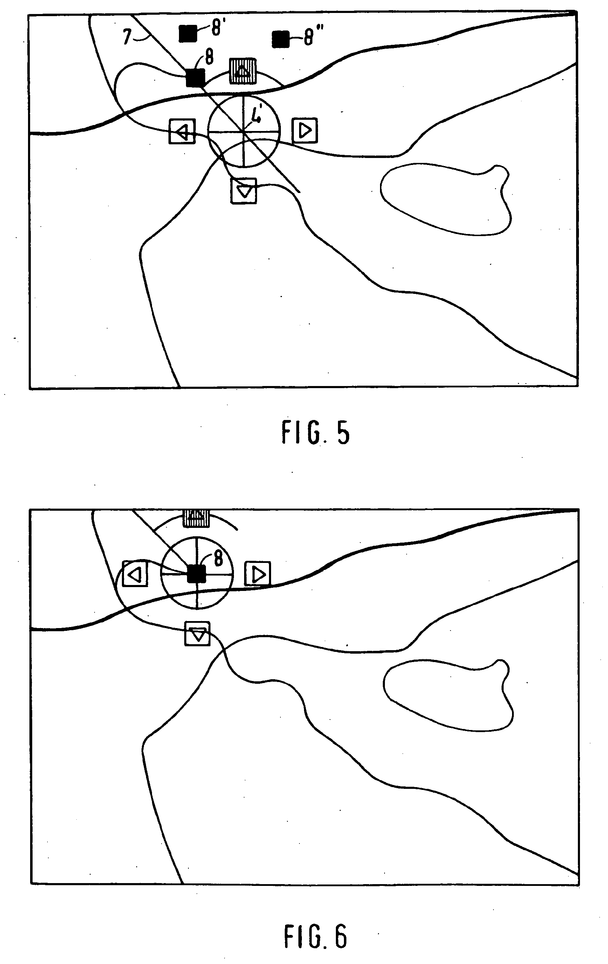

Die Bewegung des Cursors 4 ist in den Fig. 5 und 6 dargestellt. Der Cursor bewegt sich, solange er nach vorne geneigt ist, längs des Richtungsvektors 7 und erreicht das Quadrat 8. Lässt der Benutzer das Bedienelement nun los, geht es aus der geneigten Stellung in die senkrechte Ausgangslage zurück. Der Cursor 4 bleibt stehen. Der Richtungsvektor 7 und der Kreisbogen 6 werden weiterhin angezeigt, um die eingestellte Bewegungsrichtung des Cursors zu verdeutlichen. Würde das Bedienteil erneut nach vorne geneigt werden, würde sich der Cursor 4 auf dem Richtungsvektor 7 bewegen. Würde es zurück geneigt werden, würde er genau in der entgegen gesetzten Richtung bewegt werden. Eine Neigung des Bedienteils nach links oder rechts würde zu einer Bewegung des Cursors in einer dazu rechtwinkligen Richtung nach links oder rechts führen. Durch Drehen des geneigten Bedienteils nach rechts kann die Bewegung des Cursors auf senkrecht und waagrecht zurückgestellt werden.

Die Einstellung des Schräg-Winkels, unter dem sich der Cursor bewegt, kann dem Drehwinkel des Bedienteils entsprechen. Der Drehwinkel des Bedienteils kann auch gerastert und ggf. durch mechanische Anschläge begrenzt einstellbar sein. Damit ergibt sich eine eindeutige Zuordnung zwischen dem Schrägwinkel der Cursorbewegung und dem Drehwinkel des Bedienteils.

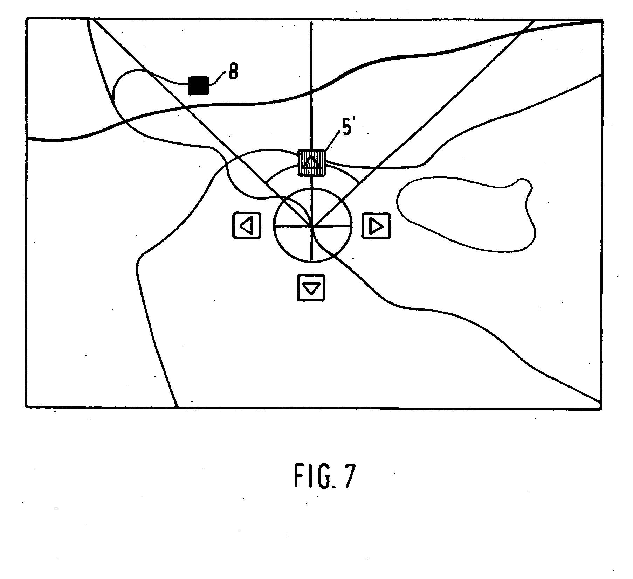

Ebenso ist es möglich, den Schräg-Winkel, unter dem sich der Cursor bewegt, durch eine entsprechende Arbeitsweise der Software, die die Umsetzung der per Bedienteil aufgegebenen Steuerungsbefehle in entsprechende Cursor-Bewegungen vornimmt, zu begrenzen. Arbeitet das Bedienteil mit Raststellungen, kann der Schräg-Winkel der CursorBewegung ebenfalls gerastet bis hin zum Maximalwert verändert werden. Eine Weiterbewegung des Bedienteils erfolgt dann leer, d.h., der Cursor bewegt sich dann nicht mehr. Bei einer Bewegung des Bedienteils in entgegensetzter Richtung, kann der Schräg-Winkel, unter dem sich der Cursor bewegt, sofort wieder verringert werden. Der Sektor für die mögliche Cursorbewegung, der durch das Verdrehen des Bedienteils überstrichen werden kann, kann auf dem Landkartenausschnitt 2 durch eine entsprechende Helltastung grafisch dargestellt werden. Dadurch sieht der Nutzer sofort, ob er den gewünschten Ort auf der Karte erreichen kann. Dies ist in Fig. 7 gezeigt.

Beim Verdrehen des Richtungsvektors 7 könnte auch eine Zusatzfunktion aktiviert werden. Das Bedienteil ist dabei wieder mit Laststellungen drehbar. Der Richtungsvektor 7 ist nach Art eines um das Zentrum 4' drehbaren Suchstrahls gestaltet, dessen Drehwinkel mit jeder Raststellung des Bedienteils verändert wird. Sind innerhalb des Landkartenausschnitts 2 mehrere Objekte vorgesehen, wird der Drehwinkel des Suchstrahls (7) variabel an die Lage der Punkte derart angepasst, dass in jeder Raststellung der Suchstrahl genau einen markanten Punkt trifft, d. h. der Richtungsvektor wird mit jeder Raststellung des Bedienteils zu einem besonderen Punkt auf der Karte weitergeschaltet. Das wäre z. B. zum Identifizieren von POI's (z. B. Tankstellen) nützlich.

Dieser Sachverhalt ist an Hand von Fig. 5 erläutert. Ausgehend von der in dieser Figur gezeigten Ausgangslage, in der der Richtungsvektor 7 als Suchstrahl das Quadrat 8 "trifft", können die weiteren Objekte des Landkartenausschnitts 2 (hier als Quadrate mit 8' und 8" dargestellt), nacheinander und unmittelbar "getroffen" werden, indem das Bedienteil jeweils um eine Raststellung nach rechts verdreht wird.

Die Bewegung des Cursors kann wie beschrieben solange erfolgen, wie das Bedienteil aus der Ausgangslage ausgelenkt ist. Sie kann auch nach kurzzeitigem Auslenken des Bedienteils selbsttätig fortgesetzt werden und nach einem vorgegebenen Weg, einer vorgegebenen Zeit oder bei Erreichen eines Markierungspunktes (hier Quadrat 8) beendet werden.

Schließlich kann wie an sich bekannt, das Bedienteil axial beweglich sein und bei einer Axialbewegung des Bedienteils eine der jeweiligen Cursorposition zugeordnete Information wiedergegeben werden. Hier handelt es sich beispielsweise um Informationen über den durch das Quadrat 8 symbolisierten Ort. Der Cursor 4 kann beispielsweise, ausgehend von der in Fig. 5 gezeigten Situation, in der der Suchstrahl das Objekt (Quadrat 8) trifft, bei der Axialbewegung sofort auf das Objekt gesetzt werden. Dieser Sachverhalt ist in Fig. 6 gezeigt.

Auf diese Weise ist es möglich, den Cursor 4 rasch und sicher in verschiedenen Richtungen innerhalb eines Landkartenausschnitts zu verfahren.

## Patentansprüche

1. Vorrichtung zur Steuerung der Bewegung eines Cursors (4) relativ zu einem in einer Bildschirmanzeige (2) wiedergegebenen Bildes mittels eines Bedienteils, das um seine Längsachse drehbar ist, das Bedienteil von einer Ausgangslage aus quer zu seiner Längsachse Bewegungen mit zwei zusätzlichen Freiheitsgraden durchführen kann und der Cursor dabei in zwei zueinander senkrechten Richtungen bewegbar ist, **dadurch gekennzeichnet, dass**
bei einer zusätzlichen Verdrehung des Bedienteils während seiner Querbewegung der Cursor in einer demgegenüber schrägen Richtung bewegbar,
der durch Drehbewegung des Bedienteils insgesamt überstreichbare Winkelbereich auf einem von einem Bildschirm dargestellten Landkartenausschnitt angezeigt, und
der Winkelbereich optisch hervorgehoben ist.

2. Vorrichtung nach Anspruch 1, **dadurch gekennzeichnet, dass** das Bedienteil eine Taumelbewegung als Querbewegung durchführen kann.

3. Vorrichtung nach Anspruch 1, **dadurch gekennzeichnet, dass** das Bedienteil eine Parallelverschiebung als Querbewegung durchführen kann.

4. Vorrichtung nach Anspruch 2 oder 3, **dadurch gekennzeichnet, dass** das Bedienteil für die Querbewegung zwangsgeführt ist.

5. Vorrichtung nach einem der Ansprüche 1 bis 4, **dadurch gekennzeichnet, dass** der Schrägwinkel dem Drehwinkel des Bedienteils entspricht.

6. Vorrichtung nach einem der Ansprüche 1 bis 5, **dadurch gekennzeichnet, dass** die Bewegung des Cursors solange erfolgt, wie das Bedienteil aus der Ausgangslage ausgelenkt ist.

7. Vorrichtung nach einem der Ansprüche 1 bis 6, **dadurch gekennzeichnet, dass** bei einer Drehung des Bedienteils im (Gegen-)Uhrzeigersinn die Bewegung des Cursors unter einem Winkel erfolgt, dessen Richtung dem Drehsinn des Bedienteils entspricht.

8. Vorrichtung nach einem der Ansprüche 1 bis 7, **dadurch gekennzeichnet, dass** die Drehbewegung des Bedienteils und/oder oder durch diese Drehbewegung überstreichbare Winkelbereich begrenzt ist.

9. Vorrichtung nach einem der Ansprüche 1 bis 8, **dadurch gekennzeichnet, dass** die tatsächliche Bewegungsrichtung des Cursors auf dem Bildschirm angezeigt ist.

10. Vorrichtung nach einem der Ansprüche 1 bis 9, **dadurch gekennzeichnet, dass** die Drehbewegung des Bedienteils gerastert erfolgt.

11. Vorrichtung nach Anspruch 10, **dadurch gekennzeichnet, dass** jeder Raststellung eine Einstellung des Cursors zugeordnet ist, in der er einen markanten Punkt in der Bildschirmanzeige markiert.

12. Vorrichtung nach einem der Ansprüche 1 bis 11, **dadurch gekennzeichnet, dass** das Bedienteil axial beweglich ist und dass bei einer Axialbewegung des Bedienteils eine der jeweiligen Cursorposition (8) zugeordnete Information wiedergebbar ist.

## Claims

1. A device for controlling the movement of a cursor (4) relative to an image reproduced in a screen display (2) by means of an operating part, which can be rotated about its longitudinal axis, the operating part, from a starting position transverse to its longitudinal axis, can carry out movements with two additional degrees of freedom and the cursor can, in the process, be moved in two directions perpendicular to one another, **characterised in that** with an additional rotation of the operating part during its transverse movement, the cursor can be moved in a direction that is oblique relative thereto, the angular range, which can in total be passed over by the rotational movement of the operating part, is displayed on a map section shown by a screen, and the angular range is visually emphasised.

2. A device according to claim 1, **characterised in that** the operating part can carry out a wobbling movement as a transverse movement.

3. A device according to claim 1, **characterised in that** the operating part can carry out a parallel displacement as the transverse movement.

4. A device according to claim 2 or 3, **characterised in that** the operating part is forcibly guided for the transverse movement.

5. A device according to any one of claims 1 to 4, **characterised in that** the oblique angle corresponds to the rotational angle of the operating part.

6. A device according to any one of claims 1 to 5, **characterised in that** the movement of the cursor takes place for as long as the operating part is deflected from the starting position.

7. A device according to any one of claims 1 to 6, **characterised in that** upon a rotation of the operating part in the (anti-)clockwise direction, the movement of the cursor takes place at an angle, the direction of which corresponds to the rotational direction of the operating part.

8. A device according to any one of claims 1 to 7, **characterised in that** the rotational movement of the operating part and/or the angular range that can be passed over by this rotational movement is limited.

9. A device according to any one of claims 1 to 8, **characterised in that** the actual movement direction of the cursor is displayed on the screen.

10. A device according to any one of claims 1 to 9, **characterised in that** the rotational movement of the operating part takes place in a rasterised manner.

11. A device according to claim 10, **characterised in that** an adjustment of the cursor is associated with each setting position, in which it marks a distinctive point in the screen display.

12. A device according to any one of claims 1 to 11, **characterised in that** the operating part is axially movable and **in that** upon an axial movement of the operating part, information associated with the respective cursor position (8) can be displayed.

## Revendications

1. Dispositif de commande du mouvement d'un curseur (4) sur l'image affichée sur un écran (2) à l'aide d'un élément de manoeuvre qui peut tourner autour de son axe longitudinal et effectuer à partir de sa position de repos, transversalement à son axe longitudinal, des mouvements avec deux degrés de liberté supplémentaires déplaçant ainsi le curseur dans deux directions perpendiculaires l'une à l'autre,
dispositif **caractérisé en ce que**
- une rotation supplémentaire de l'élément de manoeuvre au cours de son mouvement transversal, déplace le curseur dans une direction inclinée par rapport à ce mouvement,
- la plage angulaire parcourue globalement par le mouvement de rotation de l'élément de manoeuvre, est indiquée sur la partie de carte géographique représentée sur l'écran, et
- la plage angulaire est accentuée optiquement.

2. Dispositif selon la revendication 1,
**caractérisé en ce que**
l'élément de manoeuvre peut effectuer un mouvement de nutation comme mouvement transversal.

3. Dispositif selon la revendication 1,
**caractérisé en ce que**
l'élément de manoeuvre peut effectuer un coulissement parallèle comme mouvement transversal.

4. Dispositif selon la revendication 2 ou 3,
**caractérisé en ce que**
l'élément de manoeuvre est guidé de force selon le mouvement transversal.

5. Dispositif selon l'une des revendications 1 à 4,
**caractérisé en ce que**
l'angle d'inclinaison correspond à l'angle de rotation de l'élément de manoeuvre.

6. Dispositif selon l'une des revendications 1 à 5,
**caractérisé en ce que**
le mouvement du curseur se produit aussi longtemps que l'élément de manoeuvre est sorti de sa position de repos.

7. Dispositif selon l'une des revendications 1 à 6,
**caractérisé en ce que**
pour une rotation de l'élément de manoeuvre dans le sens opposé de celui des aiguilles d'une montre, le mouvement du curseur se fait suivant un angle dont la direction correspond au sens de rotation de l'élément de manoeuvre.

8. Dispositif selon l'une des revendications 1 à 7,
**caractérisé en ce que**
le mouvement de rotation de l'élément de manoeuvre et/ou la plage angulaire parcourue par ce mouvement de rotation, sont limités.

9. Dispositif selon l'une des revendications 1 à 8,
**caractérisé en ce que**
la direction effective du mouvement du curseur est affichée sur l'écran.

10. Dispositif selon l'une des revendications 1 à 9,
**caractérisé en ce que**
le mouvement de rotation de l'élément de manoeuvre se fait avec des arrêts.

11. Dispositif selon la revendication 10,
**caractérisé en ce qu'**
à chaque position d'arrêt, est associé un réglage du curseur soulignant un point marquant de l'affichage sur l'écran.

12. Dispositif selon l'une des revendications 1 à 11,
**caractérisé en ce que**
l'élément de manoeuvre est mobile axialement, et pour un mouvement axial de l'élément de manoeuvre, il y a présentation d'une information associée à la position respective (8) du curseur.
